# EUROPÄISCHE PATENTANMELDUNG

(11) **EP 2 977 811 A1**
(43) Veröffentlichungstag der Anmeldung: **27.01.2016**
(21) Anmeldenummer: 14178608.7
(22) Anmeldetag: 25.07.2014
(51) Int. Cl.: G02B 26/08, G01L 9/00, G01L 5/00

(54) **System mit einem piezoresistiven Positionssensor**

(71) Anmelder: Trumpf Laser Marking Systems AG, 7214 Gruesch (CH)
(72) Erfinder: Lani, Sébastien, 1784 Courtepin (CH); Bayat, Dara Zaman, 2000 Neuchâtel (CH)
(74) Vertreter: Kohler Schmid Möbus Patentanwälte

(57) **Zusammenfassung**

Ein System (1) mit einem Substrat (4) und einer Plattform (5), wobei die Plattform (5) über zumindest ein Festkörpergelenk (6, 6', 6") mit dem Substrat (4) verbunden ist und relativ zu diesem bewegbar ist, sowie mit zumindest einem Positionssensor mit mehreren piezoresistiven Elementen (10, 10', 14, 15, 16), die zu einer elektrischen Brücke verschaltet sind, wobei ein piezoresistives Element (10, 10') auf oder an dem zumindest einen Festkörpergelenk (6) angeordnet ist, ist dadurch gekennzeichnet, dass zumindest ein piezoresistives Element (14, 15, 16) auf oder an dem Substrat (4) oder der Plattform (5) angeordnet ist.

## Beschreibung

Die Erfindung betrifft ein System mit einem Substrat und einer Plattform, wobei die Plattform über zumindest ein Festkörpergelenk mit dem Substrat verbunden ist und relativ zu diesem bewegbar ist, sowie mit zumindest einem Positionssensor mit mehreren piezoresistiven Elementen, die zu einer elektrischen Brücke verschaltet sind, wobei ein piezoresistives Element auf oder an dem zumindest einen Festkörpergelenk angeordnet ist.

In der Lasermaterialbearbeitung werden immer kleinere kompaktere Systeme gefordert. Eine Möglichkeit, um Platz einzusparen, ist die Verwendung von Scannern mit nur einem Spiegel, welcher auf MEMS-Technologie (Microelectro mechanical systems) basiert. Klassisch werden diese Spiegel in Arrays für große Ablenkspiegel eingesetzt oder in einfachen Umlenksystemen verbaut. Hier müssen die Spiegel meist nur um eine Achse kippen und weisen kleine Auslenkwinkel auf. Um ein für die Laserbearbeitung vernünftiges Arbeitsfeld abzudecken, müssen die verwendeten Spiegel Ablenkwinkel von bis zu 10° oder mehr erreichen und in zwei Raumrichtungen auslenkbar sein. Des Weiteren müssen diese Spiegel zu einem bestimmten Zeitpunkt einen bestimmten Auslenkwinkel erreichen und damit sehr präzise angesteuert werden. Da die Auslenkung der Spiegel über Festkörpergelenke erfolgt, tritt häufig das Problem einer Schwingung in der dritten Raumrichtung auf, welche bei der Positionierung berücksichtig werden muss. Für die präzise Steuerung der Spiegel ist eine genaue und schnelle Positionsbestimmung in allen drei Raumrichtungen nötig.

Ein System mit einem solchen Positionssensor ist beispielsweise aus der US 8,559,086 B2 bekannt. Bei diesem System ist der gesamte piezoresistive Sensor, d.h. vier piezoresistive Elemente, auf einem Festkörpergelenk angeordnet, weshalb das Festkörpergelenk selbst relativ groß ausgebildet werden muss. Große Auslenkungen (+/-10°) sind da nur eingeschränkt möglich, da das System sehr starr ist.

Unter einem Festkörpergelenk versteht man einen Bereich eines Bauteils, welcher eine Relativbewegung (Drehung) zwischen zwei Starrkörperbereichen durch Biegung erlaubt. Häufig sind Festkörpergelenke als Federelemente ausgebildet.

Aufgabe der vorliegenden Erfindung ist es, ein eingangs genanntes System dahingehend weiter zu bilden, dass eine genauere Positionserfassung möglich ist.

Gelöst wird diese Aufgabe erfindungsgemäß durch ein System mit einem Substrat und einer Plattform, wobei die Plattform über zumindest ein Festkörpergelenk mit dem Substrat verbunden ist und relativ zu diesem bewegbar ist, sowie mit zumindest einem Positionssensor mit mehreren piezoresistiven Elementen, die zu einer elektrischen Brücke verschaltet sind, wobei ein piezoresistives Element auf oder an dem zumindest einen Festkörpergelenk angeordnet ist und zumindest ein piezoresistives Element auf oder an dem Substrat oder der Plattform angeordnet ist. Somit ist erfindungsgemäß vorgesehen, dass nicht der gesamte Positionssensor auf dem Festkörpergelenk angeordnet ist, sondern dass zumindest ein piezoresistives Element, welches Teil des Positionssensors ist, auf der Plattform oder dem Substrat, also einem Starrkörperbereich, angeordnet ist. Dadurch lässt sich der Platzbedarf des Positionssensors auf dem Festkörpergelenk reduzieren, so dass das Festkörpergelenk kleiner ausgebildet werden kann. Außerdem ist es möglich, dass ein einziges piezoresistives Element nahezu die gesamte Breite des Festkörpergelenks einnehmen kann. Dadurch kann das piezoresistive Element so groß ausgebildet werden, dass das Rauschen gering gehalten wird. Die piezoresistiven Elemente eines Positionssensors, vorzugsweise aller Positionssensoren, sind vorteilhafterweise gleich(-förmig) ausgebildet.

Besonders bevorzugt ist es, wenn genau ein piezoresistives Element auf oder an dem Festkörpergelenk angeordnet ist und drei piezoresistive Elemente auf oder an dem Starrkörperbereich angeordnet sind und zu einer Wheatstone-Brücke verschaltet sind. Somit sind drei piezoresistive Widerstände auf einem nicht deformierbaren Teil der Struktur aufgebracht. Wenn sich die Plattform bewegt, verformt sich das Festkörpergelenk, was zu einer veränderten mechanischen Spannung und somit zu einer Veränderung der piezoresistiven Elemente führt und in einer Widerstandsänderung resultiert. Somit ändert sich das Ausgangssignal der Wheatstone-Brücke. Anhand des Ausgangssignals kann die Positionsänderung bestimmt werden. Das Ausgangssignal (eine Spannung) kann an zwei Kontakten der Wheatstone-Brücke erzeugt werden, indem die Brücke an zwei weiteren Kontakten mit einem konstanten Strom gespeist oder an den zwei weiteren Kontakten eine konstante Spannung angelegt wird.

Zumindest ein piezoresistives Element kann aus dotiertem kristallinem oder polykristallinem Halbleitermaterial ausgebildet sein. Dadurch ist es möglich, die piezoresistiven Elemente durch lokale Dotierung, beispielsweise p-Dotierung von kristallinem Silizium auszubilden. Alternativ können die piezoresistiven Elemente durch Dotierung von polykristallinem Halbleitermaterial, insbesondere polykristallinem Silizium, hergestellt werden. Dabei kann eine polykristalline Schicht oberhalb einer Isolationsschicht mit Dünnfilmtechnik aufgebracht und dotiert werden. Der Vorteil von piezoresistiven Elementen aus polykristallinem Material ist, dass diese eine kleinere Lichtabhängigkeit aufweisen.

Die Verbindung der piezoresistiven Elemente zu einer Auswerteelektronik kann über eine Metallschicht erfolgen. An den Kontakten zwischen den piezoresistiven Elementen und dem Metall kann das Halbleitermaterial stärker dotiert werden, um einen ohmschen Kontaktwiderstand zu erhalten. Die Dotierung der piezoresistiven Elemente kann vor einem Ätzschritt des Halbleitermaterials erfolgen.

Im Halbleiterkristall sind die piezoresistiven Koeffizienten richtungsabhängig. Die piezoresistiven Elemente werden daher vorzugsweise so angelegt, dass sie einen 90°-Winkel zueinander aufweisen, so dass die piezoresitiven Koeffizienten der einzelnen Elemente ähnlich bzw. möglichst gleich sind.

Zumindest ein piezoresistives Element kann U-förmig ausgebildet sein. Der Einschnitt zwischen den beiden Armen des U 's kann durch Ätzen hergestellt werden, um einen Kurzschluss über die undotierten Regionen oder durch zu breites Diffundieren der dotierten Regionen zu vermeiden. An der Position der U-förmigen piezoresistiven Elemente können die Festkörpergelenke zweigeteilt sein.

Zumindest ein piezoresistives Element kann durch eine lichtundurchlässige Schicht abgedeckt sein. Diese lichtundurchlässige Schicht kann beispielsweise eine Metallschicht sein, die Strahlung, insbesondere Laserlicht, reflektiert oder eine andere Schicht sein, die die Strahlung, beispielsweise eines Lasers, absorbiert. Dadurch wird die Lichtempfindlichkeit des Positionssensors reduziert bzw. der Einfluss von Licht nahezu ausgeschlossen. Auch kann eine Erwärmung und damit Temperaturabhängigkeit des Positionssensors weitestgehend vermieden werden.

Gemäß einer Ausführungsform kann zumindest ein Temperatursensor auf dem Substrat oder der Plattform angeordnet sein. Dabei ist der Temperatursensor möglichst nahe an den piezoresistiven Elementen eines Positionssensors angeordnet. Da die piezoresistiven Elemente temperatursensitiv sind, ist es vorteilhaft, wenn die Temperatur erfasst werden kann, um dann einen Temperaturdrift kompensieren zu können. Der Temperatursensor kann beispielsweise als Widerstand aus Metall auf dem Substrat oder der Plattform nahe den piezoresistiven Elementen ausgebildet sein.

Das System kann auf einem SOI-Substrat (Silicon-on-Insulator-Substrat) angeordnet oder ausgebildet sein. Insbesondere kann die Plattform mit den Festkörpergelenken in einem Silicon-on-Insulator-Wafer durch Ätzen hergestellt werden. Die Lage unter den Festkörpergelenken und der Plattform wird dabei weggeätzt. Um die piezoresistiven Elemente auf dem Substrat und auf der Plattform können rundherum Gräben durch die oberste Schicht (auch als Device-Layer bezeichnet) des SOI-Wafers geätzt werden, um diese noch besser elektrisch zu isolieren.

Es können mehrere Festkörpergelenke vorgesehen sein, die entlang des Umfangs um die Plattform herum angeordnet sein können. Insbesondere können eine durch zwei, vorzugsweise vier, ganzzahlig teilbare Anzahl von Festkörpergelenken und zwei, bevorzugt vier, gleichmäßig um die Plattform angeordnete Positionssensoren vorgesehen sein. Insbesondere können bei einer durch vier ganzzahlig teilbaren Anzahl von Festkörpergelenken lediglich zwei Positionssensoren vorgesehen sein. Somit ist es möglich, die Position einer Plattform mit drei Freiheitsgraden (x-Verkippung, y-Verkippung, z-Hub) durch piezoresistive Sensoren zu messen. Die Plattform ist in der Ruheposition parallel zu einer xy-Ebene und wird durch die Festkörpergelenke, welche ebenfalls parallel zur xy-Ebene angeordnet sind, gehalten. Wenn sich die Plattform bewegt, verformen sich die Festkörpergelenke, was zu veränderter mechanischer Spannung von piezoresistiven Elementen, die auf den Festkörpergelenken angeordnet sind, führt, was wiederum zu einer Widerstandsänderung führt. Die piezoresistiven Elemente eines Positionssensors können nach Art einer Wheatstone-Brücke miteinander verschaltet sein.

Bei einer bevorzugten Ausführungsform können vier Festkörpergelenke je ein piezoresistives Element aufweisen. Demnach sind vorzugsweise vier Positionssensoren vorgesehen, deren piezoresisitve Elemente jeweils zu einer Wheatstonebrücke verschaltet sind, wobei jedes der vier piezoresistiven Elemente auf den Festkörpergelenken je mit drei anderen piezoresistiven Elementen auf einem Starrkörperbereich zu einer Wheatstonebrücke verschaltet ist. Die Ausgangssignale der Wheatstone-Brücken können miteinander verrechnet werden, um die Position der Plattform in drei Freiheitsgraden zu ermitteln.

Die vier Festkörpergelenke sind vorzugsweise jeweils 90° zueinander um die Plattform herum angeordnet. Bei einer reinen Verkippung um eine Achse führt dies dazu, dass das Ausgangssignal von sich gegenüberliegenden Wheatstone-Brücken jeweils den gleichen Betrag aufweist, jedoch unterschiedliche Vorzeichen hat. Mit dem Verhältnis der Signale von zwei Sensorpaaren kann die Richtung der Verkippung bestimmt werden. Aus dem Betrag kann der Grad der Verkippung bestimmt werden. Bei einer reinen z-Hub-Bewegung führt dies dazu, dass die Signale aller vier Wheatstone-Brücken den gleichen Betrag und das gleiche Vorzeichen aufweisen. Die Wheatstone-Brücken sollten dazu die jeweils gleiche Verschaltung haben. Bei gleichzeitigem Hub und Verkippung kann die Position in drei Freiheitsgraden aus den vier Ausgangssignalen der Wheatstone-Brücken bestimmt werden.

Die Position der piezoresistiven Elemente auf den Festkörpergelenken sollte identisch sein. Die piezoresistiven Elemente einer Brücke sind vorzugsweise identisch ausgebildet.Vorteilhafterweise sind auch die Brücken identisch ausgebildet.

Um eine genaue Positionsbestimmung zu erhalten ist es vorteilhaft, wenn die piezoresistiven Elemente auf den jeweiligen gleichförmigen Festkörpergelenken an derselben Stelle angeordnet sind.

Die piezoresistiven Elemente können auf den Festkörpergelenken plattformseitig oder substratseitig angeordnet sein. Vorzugsweise werden die piezoresistiven Elemente an einer Stelle der Festkörpergelenke angebracht, an der diese die größte mechanische Spannung bei deren Deformation aufweisen. In der Regel ist diese Stelle am Ende des Festkörpergelenks, das mit der Plattform oder dem Substrat verbunden ist. Die größte mechanische Spannung kann auch an einer beliebig anderen Stelle sein wie z.B. in der Mitte des Festköpergelenks. Dies hängt von der Ausgestaltung der Festköpergelenke ab.

Wenn ein piezoresistives Element substratseitig auf einem Festkörpergelenk angeordnet ist, werden die drei weiteren piezoresistiven Elemente der Wheatstone-Brücke auf dem Substrat möglichst nahe an dem ersten piezoresistiven Element auf dem Festkörpergelenk positioniert, damit die piezoresistiven Elemente möglichst dieselbe Temperatur aufweisen.

Wird ein piezoresistives Element am plattformseitigen Ende eines Festkörpergelenks positioniert, so werden vorzugsweise die drei weiteren piezoresistiven Elemente der Wheatstone-Brücke auf der Plattform möglichst nahe an dem Festkörpergelenk positioniert, damit alle piezoresistiven Elemente möglichst die gleiche Temperatur aufweisen.

Zumindest eine Verbindungsleitung zu einem auf der Plattform angeordneten piezoresistiven Element kann auf einem Festkörpergelenk verlaufen. Ist demnach ein piezoresistives Element auf der Plattform angeordnet, kann die elektrische Verbindung dorthin über ein Festkörpergelenk geführt sein.

Dabei ist es auch denkbar, dass auf einem Festkörpergelenk zumindest zwei Verbindungsleitungen angeordnet sind. Wenn mehrere Leitungen auf einem Festkörpergelenk verlaufen, wird das System unempfindlicher gegen elektromagnetische Felder.
Eine Verbindungsleitung zu einem auf einem Festkörpergelenk angeordneten piezoresistiven Element kann über ein benachbartes Festkörpergelenk und die Plattform oder das Substrat geführt sein. Ein piezoresistives Element soll möglichst groß ausgeführt sein. Insbesondere kann dabei ein piezoresistives Element die gesamte Breite oder im Wesentlichen die gesamte Breite des Festkörpergelenks einnehmen. Somit kann nur eine Leitung auf dem Festkörpergelenk geführt werden. Zum Anschluss des piezoresistiven Elements sind jedoch zwei Verbindungsleitungen notwendig. Die zweite notwendige Leitung kann auf einem benachbarten Festkörperelement und über die Plattform oder das Substrat geführt werden.

Auf der Plattform kann ein Spiegel angeordnet sein. In diesem Fall kann das System zur Ausrichtung eines Laserstrahls verwendet werden.

Unter der Plattform kann ein Magnet oder magnetisierbares Material angeordnet sein und zumindest eine Spule kann im Bereich des Magnets oder des magnetisierbaren Materials vorgesehen sein. Durch die Spule kann ein magnetisches Feld erzeugt werden, welches dann mit dem Magnet oder dem magnetisierbaren Material zusammenwirkt und die Plattform somit auslenken kann. Insbesondere kann die Plattform verkippt werden und/oder in z-Richtung verlagert werden.

Vorteilhafterweise können eine Messeinrichtung und eine Auswerteeinrichtung zur Messung und Auswertung der Signale der Positionssensoren vorgesehen sein. Mithilfe der Messeinrichtung und der Auswerteeinrichtung kann somit die Position bzw. Lage der Plattform erkannt werden.

Weitere Merkmale und Vorteile der Erfindung ergeben sich aus der nachfolgenden Beschreibung von Ausführungsbeispielen der Erfindung, anhand der Figuren der Zeichnung, die erfindungswesentliche Einzelheiten zeigen, und aus den Ansprüchen. Die einzelnen Merkmale können je einzeln für sich oder zu mehreren in beliebiger Kombination bei einer Variante der Erfindung verwirklicht sein.

Bevorzugte Ausführungsbeispiele der Erfindung sind in der Zeichnung schematisch dargestellt und werden nachfolgend mit Bezug zu den Figuren der Zeichnung näher erläutert. Es zeigen:
- Fig. 1: schematisch eine Schnittdarstellung durch ein erfindungsgemäßes System;
- Fig. 2: eine Draufsicht auf eine Plattform, die über Festkörpergelenke mit einem Substrat verbunden ist;
- Fig. 3: eine Draufsicht auf einen Ausschnitt des Systems;
- Fig. 4: eine Detaildarstellung eines U-förmigen piezoresistiven Elements;
- Fig. 5: eine Detaildarstellung eines auf einem Festkörpergelenk angeordneten piezoresistiven Elements;
- Fig. 6: ein U-förmiges piezoresistive Element, welches von Gräben umgeben ist.

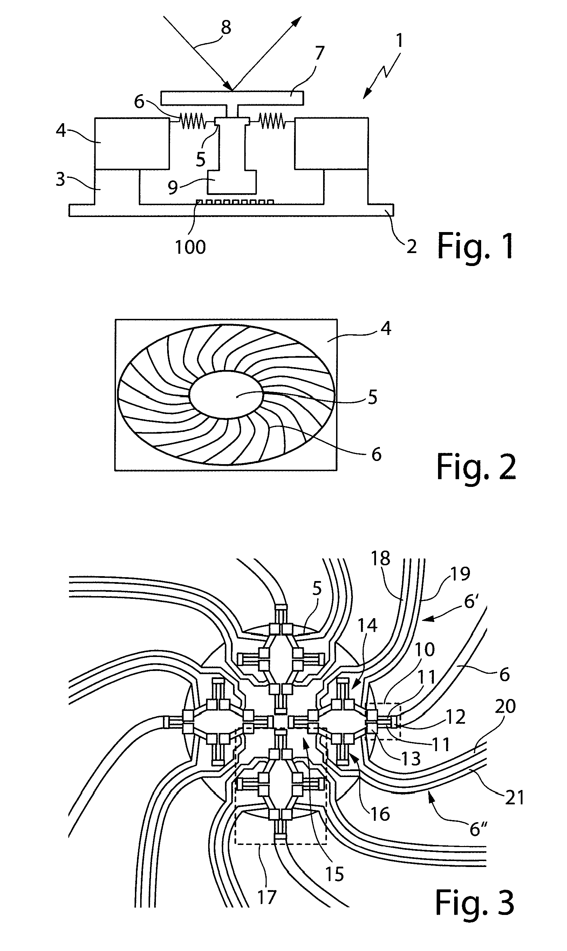

Die Figur 1 zeigt eine stark schematisierte Schnittdarstellung eines erfindungsgemäßen Systems 1. Auf einer Schicht 2 aus Keramik oder einem Leiterkartenmaterial befindet sich ein Abstandshalter 3, der als elektrisch isolierende Schicht ausgebildet sein kann. Darauf ist wiederum ein Substrat 4 aus einem Halbleitermaterial angeordnet. Mit dem Substrat 4 ist eine Plattform 5 über Festkörpergelenke 6 verbunden. Auf der Plattform 5 ist ein Spiegel 7 angeordnet, an dem Laserstrahlen 8 reflektiert werden können. Am unteren Ende der Plattform 5 ist ein Magnet 9 vorgesehen. Darunter sind eine oder mehrere Spulen 100 angeordnet. Durch die Spule 100 können magnetische Felder erzeugt werden, die dazu führen, dass sich der Magnet 9 und damit die Plattform 5 und in der Folge der Spiegel 7 bewegen. Insbesondere kann dadurch die Plattform 5 verstellt werden.

Die Figur 2 zeigt eine Draufsicht auf das System 1, wobei der Spiegel 7 nicht dargestellt ist. Hier ist zu erkennen, dass die Plattform 5 durch eine Vielzahl von leicht gebogenen Festkörpergelenken 6 mit dem Substrat 4 verbunden ist. Weiterhin ist zu erkennen, dass die Festkörpergelenke 6 entlang des Umfangs der Plattform 5 gleichmäßig verteilt sind. Die Breite der Festkörpergelenke 6, die ebenfalls aus Halbleitermaterial bestehen, beträgt im Bereich 10 µm bis 100 µm. Vorzugsweise sind die Stege im Bereich von 30 µm bis 60 µm breit.

In der Figur 3 ist zu erkennen, dass auf einem Festkörpergelenk 6 plattformseitig, also an dem Ende, an dem die Plattform 5 befestigt ist, ein piezoresistives Element 10 vorgesehen ist, wobei das piezoresistive Element 10 U-förmig ausgestaltet ist. Das piezoresistive Element 10 weist zwei p-dotierte Abschnitte 11 und zwei hoch p-dotierte Abschnitte 12, 13 auf. Das piezoresistive Element 10 auf dem Festkörpergelenk 6 ist mit drei weiteren piezoresistiven Elementen 14, 15, 16 zu einer Wheatstone-Brücke verschaltet. Eine solche Wheatstone-Brücke mit vier piezoresistiven Elementen ist durch die Ziffer 17 angedeutet.

Die piezoresisitven Elemente 10,14-16 haben im Ausführungsbeispiel je die gleich Grösse und Form und sind 90° zu einander gedreht, um jeweils ähnliche piezoresistive Koeffizienten in der jeweiligen kristallinen Richtung zu erhalten.

Die Verbindungsleitungen 18, 19, 20, 21 verlaufen auf Festkörpergelenken 6', 6", die kein eigenes piezoresistives Element tragen. Somit verlaufen die Verbindungsleitungen 18, 19, 20, 21 auf Festkörpergelenken 6', 6", die zu dem Festkörpergelenk 6 benachbart liegen.

Die piezoresistiven Elemente 10, 14, 15, 16 liegen nahe beieinander, so dass sie eine ähnliche Temperatur aufweisen. Dadurch kann eine Verfälschung des Messergebnisses vermieden werden. Auf der Plattform 5 im Bereich der piezoresistiven Elemente 10, 14, 15, 16 kann ein hier nicht dargestellter Temperatursensor vorgesehen sein. Alternativ oder zusätzlich kann ein Temperatursensor auf dem Substrat 4 angeordnet sein.

Der Abstand zwischen den piezoresistiven Elementen 10, 14, 15, 16 beträgt vorzugsweise weniger als 1000 µm, besonders bevorzugt weniger als 500 µm.

An zwei Verbindungsleitungen 18, 20 kann ein Strom eingespeist werden, während an zwei Verbindungsleitungen 19, 21 eine Ausgangsspannung mittels einer hier nicht dargestellten Messeinrichtung gemessen werden kann.

Im gezeigten Ausführungsbeispiel sind vier Wheatstone-Brücken 17 dargestellt. Dies bedeutet, dass an vier Festkörpergelenken 6 jeweils ein piezoresistives Element 10 vorgesehen ist. Die vier piezoresistiven Elemente 10 auf den Festkörpergelenken 6 weisen einen Winkel von etwa 90° zueinander auf. Bei einer reinen Verkippung der Plattform 5 in einer Achse führt dies dazu, dass das Ausgangssignal, insbesondere eine Ausgangsspannung, der gegenüberliegenden Wheatstone-Brücke um den gleichen Betrag verändert wird, jedoch ein anderes Vorzeichen vorliegt. Somit kann unter Verwendung von zwei Wheatstone-Brücken bestimmt werden, in welche Richtung die Plattform 5 ausgelenkt wurde. Wird die Plattform 5 lediglich in Z-Richtung bewegt, d.h. angehoben oder abgesenkt, weisen die Ausgangssignale der vier Wheatstone-Brücken den gleichen Betrag und dasselbe Vorzeichen auf. Die Wheatstone-Brücken weisen alle die gleiche Verschaltung auf. Bei gleichzeitigem Hub und Verkippung kann die Position der Plattform 5 in den drei Freiheitsgraden jeweils aus den vier Ausgangssignalen der Wheatstone-Brücken berechnet werden.

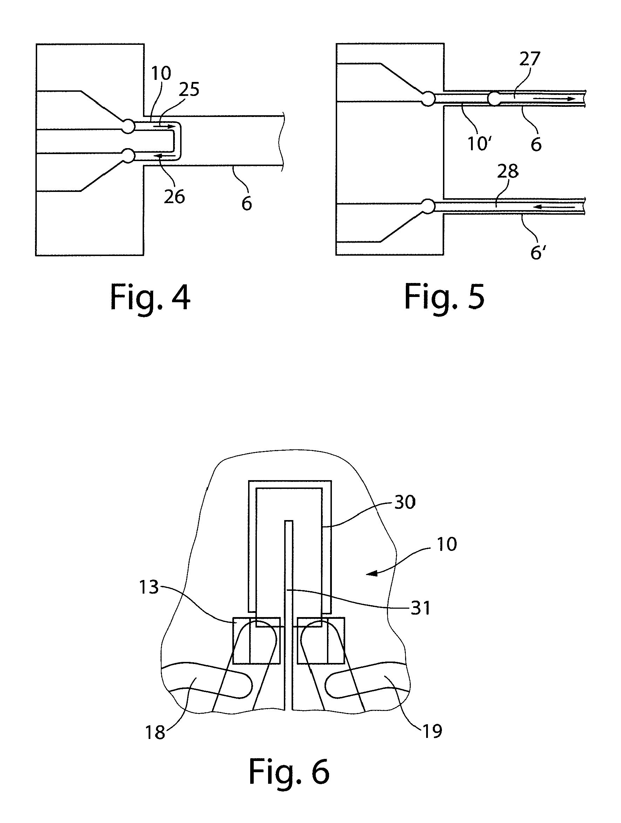

Die Figur 4 zeigt eine Ausführungsform eines piezoresistiven Elements 10. Das piezoresistive Element 10 ist U-förmig ausgebildet. Die Pfeile 25, 26 zeigen die Stromrichtung an.

Gemäß einer alternativen Ausführungsform der Figur 5 ist das piezoresistive Element 10' gerade ausgebildet. Es nimmt im Wesentlichen die gesamte Breite des Festkörpergelenks 6 ein. Die Verbindungsleitung 27 ist auf dem Festkörpergelenk 6 geführt. Da jedoch das piezoresistive Element 10' auch an der anderen Seite kontaktiert werden muss, ist eine andere Verbindungsleitung 28 über ein benachbartes Festkörpergelenk 6' geführt. Ist das piezoresistive Element 10' plattformseitig angeordnet, wird die Verbindungsleitung 28 auch über die Plattform bis zum piezoresistiven Element 10' geführt. Ist das piezoresistive Element 10' substratseitig angeordnet, ist die Verbindungsleitung 28 auch über das Substrat geführt.

Die Figur 6 zeigt eine Detaildarstellung eines U-förmigen piezoresistiven Elements 10. Hier ist zu erkennen, dass zu Isolationszwecken um das piezoresistive Element 10 herum ein Graben 30 vorgesehen ist. Auch zwischen den Schenkeln des U-förmigen piezoresistiven Elements 10 ist ein Graben 31 vorgesehen.

## Patentansprüche

1. System (1) mit einem Substrat (4) und einer Plattform (5), wobei die Plattform (5) über zumindest ein Festkörpergelenk (6, 6', 6") mit dem Substrat (4) verbunden ist und relativ zu diesem bewegbar ist, sowie mit zumindest einem Positionssensor mit mehreren piezoresistiven Elementen (10, 10', 14, 15, 16), die zu einer elektrischen Brücke verschaltet sind, wobei ein piezoresistives Element (10, 10') auf oder an dem zumindest einen Festkörpergelenk (6) angeordnet ist, **dadurch gekennzeichnet, dass** zumindest ein piezoresistives Element (14, 15, 16) auf oder an dem Substrat (4) oder der Plattform (5) angeordnet ist.

2. System nach Anspruch 1, **dadurch gekennzeichnet, dass** genau ein piezoresistives Element (10, 10') auf oder an dem Festkörpergelenk (6) angeordnet ist und drei piezoresistive Elemente (14, 15, 16) auf oder an dem Substrat (4) oder der Plattform (5) angeordnet sind und zu einer Wheatstone-Brücke (17) verschaltet sind.

3. System nach einem der vorhergehenden Ansprüche, **dadurch gekennzeichnet, dass** zumindest ein piezoresistives Element (10, 10' 14, 15, 16) aus dotiertem kristallinem oder polykristallinem Halbleitermaterial ausgebildet ist.

4. System nach einem der vorhergehenden Ansprüche, **dadurch gekennzeichnet, dass** zumindest ein piezoresistives Element (10) U-förmig ausgebildet ist.

5. System nach einem der vorhergehenden Ansprüche, **dadurch gekennzeichnet, dass** zumindest ein piezoresistives Element (10, 10', 14, 15, 16) durch eine lichtundurchlässige Schicht abgedeckt ist.

6. System nach einem der vorhergehenden Ansprüche, **dadurch gekennzeichnet, dass** zumindest ein Temperatursensor auf dem Substrat (4) oder der Plattform (5) angeordnet ist.

7. System nach einem der vorhergehenden Ansprüche, **dadurch gekennzeichnet, dass** eine durch 2, vorzugsweise 4, ganzzahlig teilbare Anzahl von Festkörpergelenken (6, 6', 6") und 2, bevorzugt 4, gleichmäßig um die Plattform angeordnete Positionssensoren vorgesehen sind.

8. System nach einem der vorhergehenden Ansprüche, **dadurch gekennzeichnet, dass** die piezoresistiven Elemente (10, 10') auf den jeweiligen gleichförmigen Festkörpergelenken (6) an derselben Stelle angeordnet sind.

9. System nach einem der vorhergehenden Ansprüche, **dadurch gekennzeichnet, dass** die piezoresistiven Elemente (10, 10') auf den Festkörpergelenken (6) plattformseitig oder substratseitig angeordnet sind.

10. System nach einem der vorhergehenden Ansprüche, **dadurch gekennzeichnet, dass** zumindest eine Verbindungsleitung (18, 19, 20, 21) zu einem auf der Plattform (5) angeordneten piezoresistiven Element (14, 15, 16) auf einem Festkörpergelenk (6', 6") verläuft.

11. System nach einem der vorhergehenden Ansprüche, **dadurch gekennzeichnet, dass** auf einem Festkörpergelenk (6`, 6") zumindest zwei Verbindungsleitungen (18-21) angeordnet sind.

12. System nach einem der vorhergehenden Ansprüche, **dadurch gekennzeichnet, dass** eine Verbindungsleitung (28) zu einem auf einem Festkörpergelenk (6) angeordneten piezoresistiven Element (10') über ein benachbartes Festkörpergelenk (6`, 6") und die Plattform (5) oder das Substrat (4) geführt ist.

13. System nach einem der vorhergehenden Ansprüche, **dadurch gekennzeichnet, dass** auf der Plattform (5) ein Spiegel (7) angeordnet ist.

14. System nach einem der vorhergehenden Ansprüche, **dadurch gekennzeichnet, dass** unter der Plattform (5) ein Magnet (9) oder magnetisierbares Material angeordnet ist und zumindest eine Spule (100) im Bereich des Magnets (9) oder des magnetisierbaren Materials vorgesehen ist.

15. System nach einem der vorhergehenden Ansprüche, **dadurch gekennzeichnet, dass** eine Messeinrichtung und eine Auswerteeinrichtung zur Messung und Auswertung der Signale der Positionssensoren vorgesehen ist.
